# FASCICULE DE BREVET EUROPEEN

(11) **EP 3 240 358 B1**
(45) Date de publication et mention de la délivrance du brevet: **27.02.2019**
(21) Numéro de dépôt: 17167893.1
(22) Date de dépôt: 25.04.2017
(51) Int. Cl.: H05B 3/14, H05B 3/84, B60Q 1/00, F21S 41/20, F21S 45/60

(54) **GLACE DE PROJECTEUR AUTOMOBILE AVEC ÉLECTRODES MÉTALLIQUES SURMOULÉES**
SCHEINWERFERSCHEIBE EINES KRAFTFAHRZEUGS MIT AUFGEFORMTEN METALLELEKTRODEN
LENS OF MOTOR VEHICLE HEADLIGHT OVERMOULDED WITH METAL ELECTRODES

(30) Priorité: 29.04.2016 FR 1653881
(43) Date de publication de la demande: 01.11.2017
(73) Titulaire: Valeo Vision, 93012 Bobigny Cedex (FR)
(72) Inventeur: FAOUCHER, Erwan, 49000 Angers (FR); JUTON, Michel, 49000 Angers (FR); GRATECAP, François, 49000 Angers (FR)
(74) Mandataire: Schaffner, Jean

(56) Documents cités:
- EP-A1- 2 315 494
- FR-A1- 2 823 466
- JP-A- H10 109 587
- US-A1- 2006 061 139
- US-A1- 2010 006 554

## Description

L'invention a trait au domaine de l'éclairage et de la signalisation lumineuse, notamment pour les véhicules automobiles. Plus précisément, l'invention a trait au domaine des dispositifs lumineux, notamment de véhicule automobile, comprenant un boîtier et une glace de fermeture dudit boîtier.

Le document de brevet publié US 2014/0332518 A1 divulgue une glace de projecteur de véhicule automobile, comprenant sur sa face intérieure un revêtement conducteur électriquement destiné à servir de résistance électrique de dégivrage de la glace. Pour ce faire, le revêtement forme une ou plusieurs pistes déposées sur la glace. Des électrodes sont disposées à deux extrémités opposées de la zone des pistes métalliques de manière à permettre une distribution homogène du courant d'alimentation pour le dégivrage vers les différentes pistes. Les électrodes sont fixées et connectées aux pistes métalliques par brasure ou par un adhésif conducteur. Chacune de ces électrodes est à distance des bords de la glace et est destinée à être connectée à une alimentation électrique. Cet enseignement ne précise cependant pas de quelle manière cette connexion est réalisée.

Le document de brevet publié DE 20 2012 005 908 U divulgue également une glace de projecteur pour véhicule automobile. La glace comprend, sur sa face extérieure cette fois-ci, un revêtement conducteur électriquement en vue de former une résistance électrique de dégivrage de ladite glace. Le revêtement forme une couche en apparence continue et comprenant des nanotubes de carbone. Un vernis de protection est déposé sur le revêtement conducteur électriquement en vue de le protéger. Le raccordement électrique du revêtement conducteur électriquement n'est pas détaillé dans cet enseignement. De plus, cet enseignement se limite spécifiquement à un revêtement conducteur électriquement disposé sur la face extérieure de la glace, en vue de son dégivrage en hiver.

Le document de brevet publié US 2007/0181565 A1 divulgue, similairement aux documents susmentionnés, une glace de projecteur pour véhicule automobile, comprenant un revêtement conducteur électriquement en vue de former une résistance électrique de dégivrage de ladite glace. Le revêtement comprend une piste conductrice électriquement formant des zigzags. Les pistes se terminent par un connecteur disposé sur la face intérieure d'une portion de renvoi de la glace. Une fiche peut alors être connectée au connecteur en vue de l'alimentation électrique de la résistance de dégivrage. Cet enseignement est intéressant en ce qu'il prévoit les mesures nécessaires au branchement électrique de la résistance de dégivrage. Ces mesures sont toutefois limitées à une résistance électrique sous forme de piste formant des zigzags et se terminant par deux terminaisons à alimenter. Ces pistes sont généralement visibles. De plus, le connecteur requiert la présence d'une portion de renvoi de la glace et le branchement se fait nécessairement à l'intérieur du boîtier.
L'invention a pour objectif de proposer une solution palliant au moins un inconvénient de l'état de l'art, plus particulièrement de l'état de l'art susmentionné. Plus précisément encore, l'invention a pour objectif de proposer une solution de dégivrage et/ou désembuage d'une glace de dispositif lumineux qui soit performante, économique et pratique.
L'invention a pour objet une glace de dispositif lumineux, notamment de véhicule automobile, comprenant : une portion principale en matière plastique transparente ; au moins deux bords de fixation à un boîtier du dispositif lumineux ; un revêtement conducteur électriquement formant une résistance électrique de dégivrage et/ou désembuage ; au moins deux électrodes reliées électriquement au revêtement conducteur; glace dans laquelle les électrodes sont situées sur les bords de fixation et sont surmoulés par la matière plastique transparente, et au moins une, préférentiellement chacune, des électrodes comprend une portion située à une extrémité extérieure du bord de manière à pouvoir être alimentée électriquement via l'extérieur du boîtier.
Selon un mode avantageux de l'invention, chacune des électrodes comprend un connecteur destiné à assurer une alimentation électrique.
Selon un mode avantageux de l'invention, chacun des connecteurs comprend au moins une broche électrique faisant saillie de l'électrode comprenant ledit connecteur, et un dispositif d'engagement avec une fiche, ledit dispositif étant un isolant électrique et ladite ou lesdites broches étant reliées électriquement avec ladite électrode.

Selon un mode avantageux de l'invention, chacun des dispositifs d'engagement forme un anneau entourant la ou les broches correspondantes, ledit anneau comprenant des moyens d'engagement mécanique avec la fiche.

Selon un mode avantageux de l'invention, les électrodes sont en matériau métallique, préférentiellement en bronze, cuivre ou en acier zingué.

Selon un mode avantageux de l'invention, chacun des dispositifs d'engagement est surmoulé sur l'électrode correspondante, préférentiellement via une plateforme.

Selon un mode avantageux de l'invention, chacun des bords comprend une électrode à une section formant un profil coudé, chacune des électrodes s'étendant le long d'un desdits bords suivant ledit profil coudé.

Selon un mode avantageux de l'invention, le revêtement conducteur électriquement recouvre les électrodes, préférentiellement sur une face intérieure de ladite glace.

Selon un premier mode de réalisation de l'invention, le revêtement conducteur électriquement est un vernis comprenant des oxydes métalliques, préférentiellement des oxydes d'indium et d'étain. Les oxydes métalliques peuvent être les oxydes suivants, pris seuls ou en combinaison parmi : oxyde de zinc dopé à l'aluminium AZO ; oxyde d'indium étain ITO ; oxyde de zirconium ZrO2 ; oxyde de tantale Ta2O5 ; oxyde d'étain dopé à l'antimoine ATO.

Avantageusement, le revêtement conducteur électrique comprend un liant. Le liant peut être un liant neutre à base d'acrylique, de polyester, et/ou de polymères. Le liant peut aussi être un liant conducteur à base de polymères conducteurs, préférentiellement à base de polyacrylonitrile, de polysulfure de phénylène (PPS) et/ou de PEDOT :PSS.

Selon un second mode de réalisation, le revêtement conducteur électriquement est à base de matière organique électriquement conductrice. Avantageusement, la matière organique est composée de polymères électriquement conducteurs transparents. Préférentiellement, les polymères sont du polysulfure de phénylène (PPS) ou du PEDOT :PSS.

Avantageusement, le revêtement conducteur électrique s'étend de manière continue sous la forme d'un film, préférentiellement sur plus de 50% de la surface de la portion principale de la glace.

Selon un mode avantageux de l'invention, chacune des électrodes s'étend sur au moins 50% de la longueur du bord la comprenant.

Selon un mode avantageux de l'invention, chacune des électrodes comprend un corps s'étendant suivant une direction principale et des branches s'étendant transversalement au corps vers le revêtement conducteur électriquement.

L'invention a également pour objet un dispositif lumineux, notamment de véhicule automobile, comprenant : un boîtier formant une cavité ouverte ; une glace fixée au boîtier et refermant la cavité ; au moins un module lumineux dans la cavité ; remarquable en ce que la glace est conforme à l'invention.

L'invention a également pour objet un procédé de réalisation d'une glace de dispositif lumineux, notamment de véhicule automobile, remarquable en ce que la glace est selon l'invention et par les étapes suivantes : (a) mise en place des électrodes dans un moule ; (b) injection de la matière plastique transparente dans le moule sur les électrodes.

Selon un mode avantageux de l'invention, le moule comprend des moyens d'accrochage des électrodes à l'étape (a).

Les mesures de l'invention sont intéressantes en ce qu'elles permettent de réaliser de manière performante et économique l'alimentation électrique de la fonction de dégivrage et/ou désembuage de la glace d'un dispositif lumineux. En effet, le fait de placer les électrodes au niveau des bords de fixation présente un premier avantage de les disposer dans des zones non visibles depuis l'extérieur. Cela présente également un deuxième avantage de pouvoir réaliser une liaison électrique vers l'extérieur du dispositif. Les connecteurs et fiches de connexion peuvent alors être disposés en dehors de la zone visible depuis l'extérieur.

D'autres caractéristiques et avantages de la présente invention seront mieux compris à l'aide de la description et des dessins parmi lesquels :
- La figure 1 est une vue en coupe suivant un plan longitudinal et vertical d'un boîtier de dispositif lumineux, avec un glace conforme à l'invention ;
- La figure 2 est une vue du boîtier de la figure 1 suivant la coupe II-II ;
- La figure 3 est une vue du boîtier de la figure 1 suivant la coupe III-III ;
- La figure 4 est une vue en perspective d'une configuration alternative des électrodes.

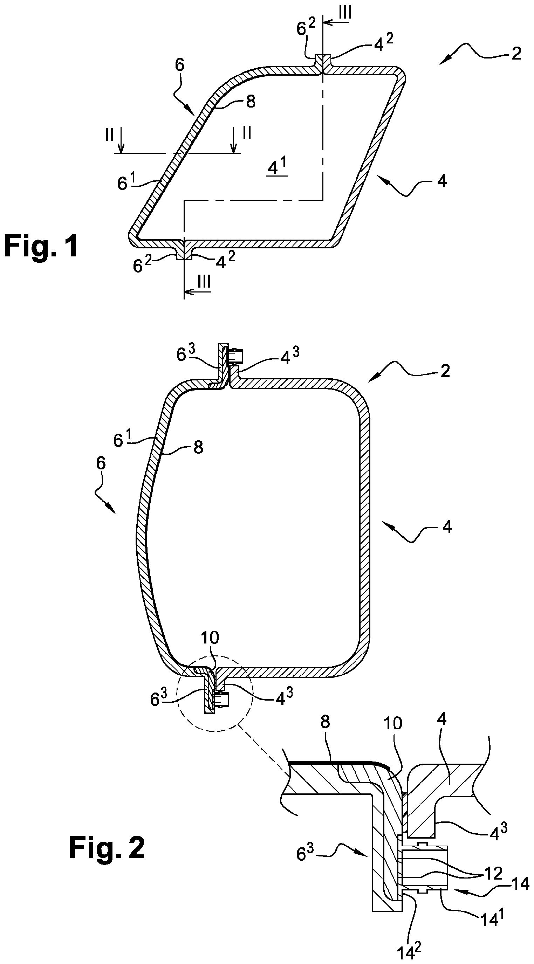

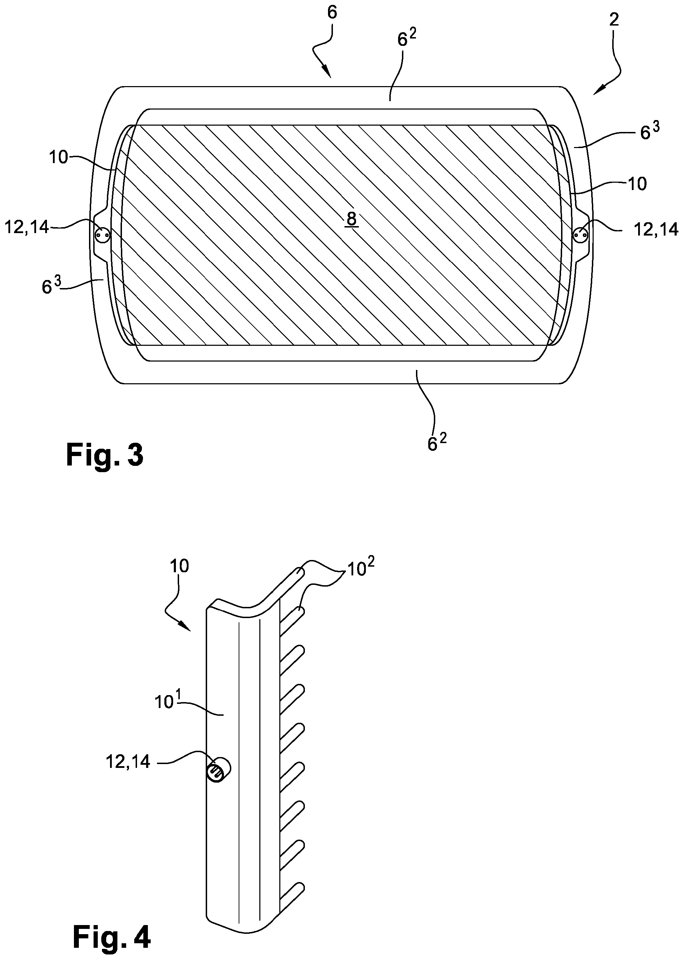

Les figures 1 à 3 illustrent un exemple de réalisation d'un dispositif lumineux conforme à l'invention. La figure 1 est une vue en coupe longitudinale verticale lorsque le dispositif est en position normale de montage sur un véhicule. Les figures 2 et 3 sont des vues suivant les coupes II-II et III-III.

En référence à la figure 1, le dispositif lumineux 2 comprend un boîtier 4 formant une cavité 4¹ avec une ouverture, ladite ouverture étant couverte par la glace 6. Le boîtier 4 est avantageusement en matériau plastique. Il peut être constitué de plusieurs éléments fixés les uns aux autres. La glace est transparente et avantageusement réalisée en matière plastique comme notamment du polycarbonate (PC). La glace 6 comprend une portion principale 6¹ destinée à être traversée par les rayons lumineux d'un ou plusieurs modules lumineux disposés dans la cavité du boîtier 4. Elle comprend également des bords supérieurs et inférieurs 6² destinés à coopérer avec des bords correspondants 4² du boîtier 4.

La portion principale 6¹ de la glace 6 comprend, avantageusement sur sa face intérieure, un revêtement conducteur électriquement 8, apte à former une résistance électrique de dégivrage et/ou désembuage de la glace 6. Ce revêtement est avantageusement un revêtement continu sous forme d'un vernis qui peut comprendre un matériau de charge conducteur électriquement, comme par exemple des oxydes d'indium-étain. L'oxyde d'indium-étain (ou oxyde d'indium dopé à l'étain ou ITO pour l'appellation anglaise « Indium tin oxide ») est un mélange d'oxyde d'indium(III) (In₂O₃) et d'oxyde d'étain (IV) (SnO₂), dans la proportion massique typique de 90 % du premier et 10 % du second. Ce composé est incolore et transparent en couches minces. La caractéristique principale de l'oxyde d'indium-étain est sa combinaison de conductivité électrique et de transparence optique. D'autres matériaux de charge conducteurs peuvent être envisagés. Le vernis comprend avantageusement un liant neutre, par exemple à base d'acrylique, de polyester, et/ou de polymères. Le liant peut aussi être un liant conducteur à base de polymères conducteurs, préférentiellement à base de polyacrylonitrile, de polysulfure de phénylène (PPS) ou de PEDOT :PSS. Il peut comprendre ou non un matériau de charge conducteur électriquement comme les oxydes métalliques susmentionnées. Le sigle PEDOT:PSS désigne un mélange de deux polymères, le poly(3,4-éthylènedioxythiophène) (PEDOT) et le poly(styrène sulfonate) de sodium (PSS).

Alternativement, le revêtement conducteur électriquement est à base de matière organique électriquement conductrice. Avantageusement, la matière organique est composée de polymères électriquement conducteurs transparents. Préférentiellement, les polymères sont du polysulfure de phénylène (PPS) ou du PEDOT :PSS.

La résistivité de ce revêtement peut être comprise entre 1E-5 et 1E-4 Ω.m. La résistance globale du revêtement peut être comprise entre 10 et 100 Ω. La résistance globale va aussi dépendre de la taille de la zone traitée. Il peut être déposé avec une épaisseur comprise entre 1 et 5µm, préférentiellement entre 2 et 3µm.

La figure 2 est une vue suivant la coupe II-II du dispositif 2 de la figure 1. On peut observer que la glace 6 comprend des bords latéraux 6³ coopérant avec des bords correspondants 4³ du boîtier 4. Ces bords latéraux 6³ comprennent des électrodes 10 noyées dans la matière plastique formant la glace 6. On peut également observer que le revêtement conducteur électriquement 8 s'étend transversalement jusqu'à recouvrir les électrodes 10. Ces dernières sont en effet positionnées au niveau des bords 6³ de manière à présenter librement leurs faces internes, ces dernières pouvant alors être en contact direct avec le revêtement conducteur électriquement 8.

Les électrodes sont avantageusement en matériau métallique, comme notamment du cuivre, du bronze ou de l'acier zingué.

Toujours à la figure 2, plus précisément à la zone représentée de manière agrandie dans un cercle, on peut observer les détails de positionnement d'une des électrodes 10 par rapport à la matière de la glace qui est surmoulée. L'électrode 10 présente une section avec un profil coudé se conformant au profil coudé du bord 6³. Ce profil coudé de l'électrode 10 permet d'assurer une liaison électrique entre la face interne de glace 6, sur laquelle le revêtement conducteur 8 est appliqué et l'extérieur du dispositif lumineux 2 en vue de son alimentation électrique. Un connecteur 12+14 est disposé sur l'électrode 10. Il comprend une ou plusieurs broches électriques 12 faisant saillie de l'électrode 10 et reliées électriquement avec ladite électrode 10. Il comprend également un dispositif 14 d'engagement avec une fiche (non représentée). Ce dernier peut être formé par une paroi annulaire 14¹ en matériau isolant électriquement et une plateforme 14² intégralement formée avec la paroi annulaire et surmoulée sur l'électrode 10. La paroi annulaire 14¹ entoure les broches 12. Des moyens d'engagement mécanique peuvent être prévus sur la paroi annulaire 14¹, en vue d'assurer une retenue de la fiche (non représentée). Ce qui vient d'être décrit pour un bord 6³ du dispositif 2 vaut également pour le bord opposé 6³.

Dans la représentation de la figure 2, les connecteurs 12+14 sont prévus à l'extérieur du boîtier 4. Il est toutefois entendu qu'ils peuvent être prévus à l'intérieur.

La figure 3 est une vue selon la coupe III-III de la figure 1, c'est-à-dire une vue arrière de la glace 6. On peut constater l'étendue du revêtement conducteur 8 sur essentiellement toute la largeur de la glace, depuis un des bords 6³ latéraux jusqu'au bord opposé 6³. On peut également observer que chaque électrode 10 s'étend longitudinalement suivant le bord correspondant 6³.

Dans la représentation des figures 2 et 3, les électrodes 10 sont disposées sur les bords latéraux 6³, de manière à générer un courant suivant une direction essentiellement horizontale le long du revêtement conducteur 8. Il est toutefois entendu que les électrodes 10 peuvent, de manière alternative ou complémentaire, être disposées sur les bords supérieur et inférieur 6². Dans ce cas, le courant parcourant le revêtement conducteur 10 sera orienté essentiellement verticalement. Encore de manière alternative, il est envisageable de prévoir une électrode sur un bord supérieur ou inférieur 6² et une autre électrode sur un bord latéral 6³, le courant étant alors essentiellement oblique. En d'autres termes, différentes configurations des électrodes sont possibles sur les bords 6² et 6³, pour autant qu'elles permettent de faire circuler un courant le long du revêtement conducteur 8.

La figure 4 est une illustration d'une configuration alternative des électrodes. L'électrode 10 qui est représentée comprend un corps 10¹ s'étendant longitudinalement, suivant le bord de la glace dans lequel l'électrode est destinée à être logée, et des branches 10² s'étendant transversalement, préférentiellement perpendiculairement, au corps longitudinal 10¹. Le revêtement conducteur est alors avantageusement en contact uniquement avec les branches 10², ces dernières assurant alors, via le corps 10¹, la répartition du courant le long du bord de la glace.

Aux figures 2 et 4, les électrodes sont représentées avec une section coudée. Il est toutefois à noter qu'il est envisageable que le corps des électrodes ne soit pas coudé mais bien, par exemple, généralement plat, en fonction notamment de la configuration de la glace ainsi que de l'emplacement du connecteur à l'intérieur ou à l'extérieur du boîtier.

La réalisation de la glace qui vient d'être décrite peut être opérée comme suit. Dans un moule dédicacé, on place les électrodes à leurs emplacements finaux au niveau des bords de la glace à former. Elles peuvent par ailleurs être fixées au moule par des moyens classiques, tels que la réalisation de logements ad hoc et/ou des zones aimantées assurant leur retenue. Le moule est ensuite fermé par un contre-moule et la matière transparente de la glace est alors injectée sous forme liquide ou pâteuse dans le moule, recouvrant ainsi les électrodes. Ces dernières sont ainsi surmoulées. Une fois la matière injectée refroidie, on peut ouvrir le moule et sortir la glace ainsi formée. Le revêtement conducteur électriquement peut ensuite être appliqué sur la glace de manière à contacter les électrodes. Les électrodes peuvent subir un traitement de surface classique et bien connu en soi de l'homme de métier pour assurer une bonne cohésion avec la matière transparente.

## Revendications

1. Glace (6) de dispositif lumineux (2), notamment de véhicule automobile, comprenant :
- une portion principale (6¹) en matière plastique transparente ;
- au moins deux bords de fixation (6², 6³) à un boîtier (4) du dispositif lumineux (2) ;
- un revêtement conducteur électriquement (8) formant une résistance électrique de dégivrage et/ou désembuage ;
- au moins deux électrodes (10) reliées électriquement au revêtement conducteur (8) ;
et dans laquelle les électrodes (10) sont situées sur les bords de fixation (6³) et sont surmoulés par la matière plastique transparente, **caractérisée en ce qu'**au moins une, préférentiellement chacune, des électrodes (10) comprend une portion située à une extrémité extérieure du bord correspondant (6³) de manière à pouvoir être alimentée électriquement via l'extérieur du boîtier (4).

2. Glace (6) selon la revendication 1, **caractérisée en ce que** chacune des électrodes (10) comprend un connecteur (12, 14) destiné à assurer une alimentation électrique.

3. Glace (6) selon la revendication 2, **caractérisée en ce que** chacun des connecteurs comprend au moins une broche électrique (12) faisant saillie de l'électrode (10) comprenant ledit connecteur, et un dispositif d'engagement (14) avec une fiche, ledit dispositif (14) étant en matériau isolant électrique et ladite ou lesdites broches (12) étant reliées électriquement avec ladite électrode (10).

4. Glace (6) selon la revendication 3, **caractérisée en ce que** chacun des dispositifs d'engagement (14) comprend un anneau (14¹) entourant la ou les broches correspondantes (12), ledit anneau (14¹) comprenant des moyens d'engagement mécanique avec la fiche.

5. Glace (6) selon l'une des revendications 1 à 4, **caractérisée en ce que** les électrodes (10) sont en matériau métallique, préférentiellement en bronze, cuivre ou en acier zingué.

6. Glace (6) selon l'une des revendications 3 et 4 et selon la revendication 5, **caractérisée en ce que** chacun des dispositifs d'engagement (14) est surmoulé sur l'électrode correspondante (10), préférentiellement via une plateforme (14²).

7. Glace (6) selon l'une des revendications 1 à 6, **caractérisée en ce que** chacun des bords (6³) comprenant les électrodes (10) a une section formant un profil coudé, chacune des électrodes (10) s'étendant le long d'un desdits bords suivant ledit profil coudé.

8. Glace (6) selon l'une des revendications 1 à 7 **caractérisée en ce que** le revêtement conducteur électriquement (8) recouvre les électrodes (10), préférentiellement sur une face intérieure de ladite glace.

9. Glace (6) selon l'une des revendications 1 à 8, **caractérisée en ce que** le revêtement conducteur électrique (8) est un vernis comprenant des oxydes métalliques, préférentiellement des oxydes d'indium et d'étain.

10. Glace (6) selon l'une des revendications 1 à 9, **caractérisée en ce que** chacune des électrodes (10) s'étend sur au moins 50% de la longueur du bord (6³) la comprenant.

11. Glace (6) selon l'une des revendications 1 à 9, **caractérisée en ce que** chacune des électrodes (10) comprend un corps (10¹) s'étendant suivant une direction principale et des branches (10²) s'étendant transversalement au corps (10¹) vers le revêtement conducteur électriquement (8).

12. Dispositif lumineux (2), notamment de véhicule automobile, comprenant :
- un boîtier (4) formant une cavité ouverte ;
- une glace (6) fixée au boîtier et refermant la cavité ;
- au moins un module lumineux dans la cavité ;
**caractérisé en ce que**
la glace (6) est conforme à l'une des revendications 1 à 11.

13. Procédé de réalisation d'une glace (6) de dispositif lumineux (2), notamment de véhicule automobile, **caractérisé en ce que** la glace (6) est selon l'une des revendications 1 à 11 et par les étapes suivantes :
(a) mise en place des électrodes (10) dans un moule ;
(b) injection de la matière plastique transparente dans le moule sur les électrodes (10).

14. Procédé selon la revendication 13, **caractérisé en ce que** le moule comprend des moyens d'accrochage des électrodes (10) à l'étape (a).

## Patentansprüche

1. Scheibe (6) einer Beleuchtungseinrichtung (2), insbesondere für ein Kraftfahrzeug, umfassend:
- einen Hauptabschnitt (6¹) aus transparentem Kunststoff;
- mindestens zwei Befestigungsränder (6², 6³) zur Befestigung an einem Gehäuse (4) der Beleuchtungseinrichtung (2);
- einen elektrisch leitfähigen Überzug (8), der einen elektrischen Widerstand zum Enteisen und/oder Beseitigen von Beschlag bildet;
- mindestens zwei Elektroden (10), die mit dem leitfähigen Überzug (8) elektrisch verbunden sind;
und bei der die Elektroden (10) an den Befestigungsrändern (6³) gelegen sind und durch den transparenten Kunststoff aufgeformt sind, **dadurch gekennzeichnet, dass** mindestens eine, bevorzugt jede, der Elektroden (10) einen Abschnitt umfasst, der an einem äußeren Ende des entsprechenden Randes (6³) gelegen ist, so dass sie von außerhalb des Gehäuses (4) mit Strom versorgt werden kann.

2. Scheibe (6) nach Anspruch 1, **dadurch gekennzeichnet, dass** jede der Elektroden (10) einen Steckverbinder (12, 14) umfasst, der dazu bestimmt ist, eine Stromversorgung zu gewährleisten.

3. Scheibe (6) nach Anspruch 2, **dadurch gekennzeichnet, dass** jeder der Steckverbinder mindestens einen elektrischen Kontaktstift (12) umfasst, der aus der Elektrode (10) hervorragt, die den Steckverbinder umfasst, und eine Eingriffsvorrichtung (14) zum Eingriff mit einem Stecker, wobei die Vorrichtung (14) aus elektrisch isolierendem Material ist und der oder die Kontaktstifte (12) elektrisch mit der Elektrode (10) verbunden sind.

4. Scheibe (6) nach Anspruch 3, **dadurch gekennzeichnet, dass** jede der Eingriffsvorrichtungen (14) einen Ring (14¹) umfasst, der den oder die entsprechenden Kontaktstifte (12) umgibt, wobei der Ring (14¹) Mittel zum mechanischen Eingriff mit dem Stecker umfasst.

5. Scheibe (6) nach einem der Ansprüche 1 bis 4, **dadurch gekennzeichnet, dass** die Elektroden (10) aus metallischem Material sind, bevorzugt aus Bronze, Kupfer oder verzinktem Stahl.

6. Scheibe (6) nach einem der Ansprüche 3 und 4 und nach Anspruch 5, **dadurch gekennzeichnet, dass** jede der Eingriffsvorrichtungen (14) auf die entsprechende Elektrode (10) aufgeformt ist, bevorzugt über eine Platte (14²).

7. Scheibe (6) nach einem der Ansprüche 1 bis 6, **dadurch gekennzeichnet, dass** jeder der Ränder (6³), welche die Elektroden (10) umfassen, einen Querschnitt hat, der ein gewinkeltes Profil bildet, wobei sich jede der Elektroden (10) gemäß dem gewinkelten Profil entlang eines der Ränder erstreckt.

8. Scheibe (6) nach einem der Ansprüche 1 bis 7, **dadurch gekennzeichnet, dass** der elektrisch leitfähige Überzug (8) die Elektroden (10) überzieht, bevorzugt auf einer Innenseite der Scheibe.

9. Scheibe (6) nach einem der Ansprüche 1 bis 8, **dadurch gekennzeichnet, dass** der elektrisch leitfähige Überzug (8) ein Lack ist, der Metalloxide umfasst, bevorzugt Indium- und Zinnoxide.

10. Scheibe (6) nach einem der Ansprüche 1 bis 9, **dadurch gekennzeichnet, dass** sich jede der Elektroden (10) über mindestens 50 % der Länge des sie umfassenden Randes (6³) erstreckt.

11. Scheibe (6) nach einem der Ansprüche 1 bis 9, **dadurch gekennzeichnet, dass** jede der Elektroden (10) einen Körper (10¹) umfasst, der sich entlang einer Hauptrichtung erstreckt, und Schenkel (10²), die sich quer zum Körper (10¹) zum elektrisch leitfähigen Überzug (8) hin erstrecken.

12. Beleuchtungseinrichtung (2), insbesondere für ein Kraftfahrzeug, umfassend:
- ein Gehäuse (4), das eine offene Kavität bildet;
- eine Scheibe (6), die am Gehäuse befestigt ist und die Kavität verschließt;
- mindestens ein Leuchtmodul in der Kavität;
**dadurch gekennzeichnet, dass** die Scheibe (6) einem der Ansprüche 1 bis 11 entspricht.

13. Verfahren zur Ausführung einer Scheibe (6) für eine Beleuchtungseinrichtung (2), insbesondere für ein Kraftfahrzeug, **dadurch gekennzeichnet, dass** die Scheibe (6) einem der Ansprüche 1 bis 11 entspricht, und durch die folgenden Schritte:
(a) Einsetzen der Elektroden (10) in eine Form;
(b) Einspritzen von transparentem Kunststoff in die Form auf die Elektroden (10).

14. Verfahren nach Anspruch 13, **dadurch gekennzeichnet, dass** die Form Mittel zum Halten der Elektroden (10) im Schritt (a) umfasst.

## Claims

1. Outer lens (6) for a luminous device (2), in particular for a motor vehicle, said outer lens comprising:
- a main portion (6¹) made of transparent plastic;
- at least two edges (6², 6³) for fastening to a housing (4) of the luminous device (2);
- an electrically conductive coating (8) forming a defrosting and/or demisting electrical resistor;
- at least two electrodes (10) that are electrically connected to the conductive coating (8);
and in which
the electrodes (10) are located on the fastening edges (6³) and are overmolded by the transparent plastic,
**characterized in that** at least one and preferably each of the electrodes (10) comprises a portion located at an exterior end of the corresponding edge (6³) so as to be able to be supplied with electrical power via the exterior of the housing (4) .

2. Outer lens (6) according to Claim 1, **characterized in that** each of the electrodes (10) comprises a connector (12, 14) that is intended to allow the supply of electrical power.

3. Outer lens (6) according to Claim 2, **characterized in that** each of the connectors comprises at least one electrical pin (12) that protrudes from the electrode (10) comprising said connector, and a device (14) for engaging with a plug, said device (14) being made of an electrical insulator and said one or more pins (12) being electrically connected to said electrode (10).

4. Outer lens (6) according to Claim 3, **characterized in that** each of the engaging devices (14) comprises a ring (14¹) encircling the one or more corresponding pins (12), said ring (14¹) comprising means for mechanically engaging with the plug.

5. Outer lens (6) according to one of Claims 1 to 4, **characterized in that** the electrodes (10) are made of metal and preferably of bronze, copper or galvanized steel.

6. Outer lens (6) according to either of Claims 3 and 4 and according to Claim 5, **characterized in that** each of the engaging devices (14) is overmolded onto the corresponding electrode (10), preferably via a platform (14²).

7. Outer lens (6) according to one of Claims 1 to 6, **characterized in that** each of the edges (6³) comprising the electrodes (10) has a cross section forming a dog-legged profile, each of the electrodes (10) extending along one of said edges following said dog-legged profile.

8. Outer lens (6) according to one of Claims 1 to 7, **characterized in that** the electrically conductive coating (8) covers the electrodes (10), preferably on an interior face of said outer lens.

9. Outer lens (6) according to one of Claims 1 to 8, **characterized in that** the electrically conductive coating (8) is a varnish containing metal oxides, preferably tin and indium oxides.

10. Outer lens (6) according to one of Claims 1 to 9, **characterized in that** each of the electrodes (10) extends over at least 50% of the length of the edge (6³) comprising it.

11. Outer lens (6) according to one of Claims 1 to 9, **characterized in that** each of the electrodes (10) comprises a body (10¹) extending in a main direction and branches (10²) extending transversely to the body (10¹) toward the electrically conductive coating (8).

12. Luminous device (2), in particular for a motor vehicle, said device comprising:
- a housing (4) forming an open cavity;
- an outer lens (6) fastened to the housing and closing the cavity;
- at least one luminous module in the cavity; **characterized in that**
the outer lens (6) is according to one of Claims 1 to 11.

13. Process for producing an outer lens (6) for a luminous device (2), in particular for a motor vehicle, said process being **characterized in that** the outer lens (6) is according to one of Claims 1 to 11 and by the following steps:
(a) a step in which the electrodes (10) are placed in a mold;
(b) a step in which the transparent plastic is injected into the mold onto the electrodes (10).

14. Process according to Claim 13, **characterized in that** the mold comprises means for holding the electrodes (10) in place in step (a).
